# EUROPÄISCHE PATENTSCHRIFT

(11) **EP 0 504 658 B1**
(45) Veröffentlichungstag und Bekanntmachung des Hinweises auf die Patenterteilung: **27.12.1995**
(21) Anmeldenummer: 92103694.3
(22) Anmeldetag: 04.03.1992
(51) Int. Cl.: H04M 19/02, H04M 3/50

(54) **Verfahren zur Aktivierung einer optischen Anzeige in einem an eine Kommunikationsanlage angeschlossenen analogen Kommunikationsendgerät**
Method for the activation of an optical indicator in an analogic communication terminal connected to a communication equipment
Procédé pour l'activation d'un affichage optique dans un terminal de communication analogique relié à un système de communication

(30) Priorität: 21.03.1991 DE 4109310
(43) Veröffentlichungstag der Anmeldung: 23.09.1992
(73) Patentinhaber: SIEMENS AKTIENGESELLSCHAFT, 80333 München (DE)
(72) Erfinder: Böttger, Detlev, Dipl.-Ing., W-5840 Schwerte 40 (DE); Dziennus, Norbert, Dipl.-Ing., W-4600 Dortmund 50 (DE); Fink, Günter, W-5000 Köln 90 (DE); Busch, Gerd, Dipl.-Ing., W-4630 Bochum 1 (DE)

(56) Entgegenhaltungen:
- EP-A- 0 187 366
- DE-A- 3 012 428
- US-A- 4 438 506
- PATENT ABSTRACTS OF JAPAN vol. 9, no. 328 (E-369)(2051) 24. Dezember 1985 & JP-A-60 160 765 (HITACHI SEISAKUSHO K.K.) 22.AUGUST 1985

## Beschreibung

Die Erfindung betrifft ein Verfahren zur Aktivierung einer optischen Anzeige in einem an eine programmgesteuerte Kommunikationsanlage über analoge Anschlußleitungen bzw. Anschlußtechnik angeschlossenen Kommunikationsendgerät, wobei die Kommunikationsanlage eine unter anderem die vermittlungstechnische Steuerung und Koordinierung durchführende zentrale Steuereinheit aufweist und in den jeweiligen Leitungsanschlußeinrichtungen durch eine Rufprozedur Schaltmittel gesteuert werden, durch die wechselstromförmige Rufsignale an die jeweilige Anschlußleitung anschaltbar sind und die Rufsignale in einem Ruftongenerator einer zentralen Signaleinrichtung erzeugt und über eine Rufleitung an die Leitungsanschlußeinrichtungen verteilt werden, wobei eine Leitungsindikation erfolgt, durch deren Abfrage die zentrale Steuereinheit den aktuellen Zustand der jeweiligen Anschlußleitung feststellt.

Ein derartiges Verfahren ist z.B. aus der DE-A-3 012 428 bekannt und ebenfalls Gegenstand der gleichzeitig eingereichten EP-A-0 504 716.

Die neuzeitlichen digitalen rechnergesteuerten Kommunikationsvermittlungsanlagen lassen den Einsatz von unterschiedlichen Kommunikationsendgeräten zu. Diese können sich also in ihrer Anschlußart und gegebenenfalls in den ihnen zugrundeliegenden Wahlverfahren unterscheiden. So dienen beispielsweise digitale Teilnehmeranschlußbaugruppen dem Anschluß von digitalen Kommunikationsendgeräten. Analoge Kommunikationsendgeräte sind über "analoge" Anschlußtechnik angeschlossen. Die analogen Sprach-, Wähl- und Rufsignale werden hierbei über analoge Anschlußleitungen, die beispielsweise durch zwei symmetrische, verdrillte Kupferleitungen gebildet werden, vom bzw. zum Kommunikationsendgerät übermittelt. Für die Aktivierung der akustischen Rufeinrichtung in den Kommunikationsendgeräten sind überwiegend niederfrequente Wechselstromsignale als Rufsignale vorgesehen. Diese wechselstromförmigen Rufsignale werden in digitalen programmgesteuerten Kommunikationsvermittlungsanlagen überwiegend in einer zentralen Rufgeneratoreinrichtung erzeugt und über Rufleitungen an die Leitungsanschlußeinrichtungen geführt. In den für den Anschluß analoger Kommunikationsendgeräte vorgesehenen Leitungsanschlußeinrichtungen werden die Rufsignale mit Hilfe von Schaltmitteln, die z. B. Relais darstellen, an die Adern der jeweiligen Anschlußleitungen angeschaltet. Die in den Leitungsanschlußeinrichtungen angeordneten Schaltmittel werden durch in der Kommunikationsvermittlungsanlage realisierte Rufprozeduren gesteuert.

Digitale Kommunikationsendgeräte weisen in der Regel ein Display auf, über das einem Teilnehmer gesprächsbegleitend oder auch im Ruhezustand des jeweiligen Endgerätes bestimmte Informationen in Form einer Textdarstellung angezeigt werden können. Für angeschlossene analoge Kommunikationsendgeräte, die kein Display aufweisen, werden in zunehmendem Maße neben den akustischen oder optischen Ausgaben für Rufsignale zusätzliche optische Anzeigen, z. B. durch Aktivieren eines am Fernsprechendgerät vorhandenen Leuchtelementes, verwendet. Dadurch können neue Leistungsmerkmale realisiert werden. Eines dieser Leistungsmerkmale ist z.B. das Merkmal "Message Waiting". Hierbei kann durch einen entsprechenden Bedienerauftrag ein Fernsprechteilnehmer darüber informiert werden, daß beispielsweise an der Rezeption eines Hotels eine Nachricht für ihn vorliegt. Es ist auch dadurch möglich, an einem analogen Endgerät nach dem Ende einer aktuellen Verbindung durch diese zusätzliche optische Anzeige zu signalisieren, daß während der vorhergehenden Verbindung ein weiterer Verbindungsaufbau zu diesem Endgerät versucht wurde. Um einen Teilnehmer eines Nebenstellensystems durch ein optisches Aufmerksamkeitssignal eine bestimmte Information zu übermitteln, ist es z. B. bekannt, durch einen kurzen spannungsmäßig überhöhten Impuls eine am Fernsprechendgerät angebrachte Glimmlampe zu zünden. Die weitere Aktivierung der Glimmlampe erfolgt dann durch den Schleifenstrom.

Eine andere Möglichkeit, das Leistungsmerkmal "Message Waiting" zu realisieren, besteht in der Anwendung einer zusätzlichen Baueinheit, für die ein eigenes Leitungssystem vorzusehen ist. Über dieses Leitungssystem wird dann eine Lampe aktiviert.

Es ist die Aufgabe der Erfindung, für eine programmgesteuerte Kommunikationsvermittlungsanlage der eingangs erläuterten Art eine in einem daran angeschlossenen Kommunikationsendgerät angeordnete optische Anzeige für die Realisierung zusätzlicher Leistungsmerkmale in einfacher Weise zu aktivieren.

Dies wird dadurch erreicht, daß mit Hilfe mindestens eines für jede der genannten Anschlußleitungen vorhandenen, zusätzlichen Schaltmittels entweder durch eine an einem Vermittlungsplatz durch eine bestimmte Prozedur vorgenommene Informationseingabe oder automatisch im Zusammenhang mit einer vorbestimmten vermittlungstechnischen Situation zur Aktivierung der optischen Anzeige in einem damit ausgewählten Kommunikationsendgerät die betreffende Anschlußleitung während einer bis zur Bildung einer jeweiligen Endeinformation definierten Zeitspanne mit einer bestimmten Taktimpulsfolge kurzgeschlossen wird, daß sowohl zur fehlerfreien Leitungsindikation als auch zur sicheren Vermeidung des Ansprechens der Rufanzeige im Kommunikationsendgerät die Zeitdauer des wirksamen Kurzschlusses unterhalb der Ansprechzeit der Leitungsindikation und der jeweils dazwischenliegende Zeitabschnitt länger als die Zeitdauer des wirksamen Kurzschlusses gewählt ist, daß mit dem Wirksamwerden der Taktimpulsfolge eine Steuerinformation hierüber bis zur durch die zentrale Steuereinheit oder teilnehmer- bzw. vermittlungsplatzseitig initiierbaren Endeinformation in einem Arbeitsspeicherbereich einer Speichereinrichtung der zentralen Steuereinheit eingeschrieben ist.

Erfindungsgemäß wird also durch zyklischen Kurzschließen der Adern der jeweiligen Anschlußleitung in einfacher Weise die optische Anzeige aktiviert, ohne daß die akustische Rufanzeige im Kommunikationsendgerät anspricht. Bei Kommunikationsendgeräten, die neben einem akustischen Signalgeber, beispielsweise in Form eines elektronischen Tonrufsignalgebers, zusätzlich mit einer optischen Signalisierung eines anstehenden Anrufes ausgestattet sind, können diese für die optische Signalisierung verwendeten Leuchtelemente ohne jegliche Änderung für die erfindungsgemäße optische Anzeige zur Realisierung zumindest eines zusätzlichen Leistungsmerkmales herangezogen werden. Wird beim zyklischen Kurzschließen das Impuls-Pausen-Verhältnis entsprechend gewählt, so ist eine Störung der vorhandenen Schleifenindikation in jedem Fall ausgeschlossen. Von der zentralen Steuereinheit werden aufgrund der in der Anlage implementierten Anzeigeprozedur die Anforderungen zum Ermitteln von Anzeigesignalen für die optische Anzeige bewertet und die entsprechenden Vorgänge, wie z. B. Steuern des Schaltmittels in der Leitungsanschlußeinrichtung, bewirkt. In der zentralen Steuereinheit ist in einem Arbeitsspeicherbereich der hier zugeordneten Speichereinrichtung, die beispielsweise mit Hilfe einer "Interrupt"-Prozedur zyklisch abgefragt wird, abgespeichert, daß aktuell ein zyklisches Kurzschließen der Adern der Anschlußleitung vorgenommen wird.

Dieses taktgemäße Kurzschließen kann durch ein von der zentralen Steuereinheit während der durch eine Anfangs- bzw. durch eine Endeinformation definierten Zeitspanne im Rhythmus der Taktimpulsfolge gesteuerten leitungsindividuellen Schaltmittel bewirkt werden.

Um die dynamische Belastung des Mikroprozessors der zentralen Steuereinheit zu reduzieren, kann gemäß einer Weiterbildung der Erfindung die Taktimpulsfolge von einem der zentralen Signaleinrichtung zugehörigen Taktgenerator erzeugt werden. Diese Taktimpulsfolge wird über eine den Leitungsanschlußeinrichtungen gemeinsam zugeordnete zusätzliche Signalleitung verteilt. Über die während der betreffenden Zeitspanne ständig aktivierten Schaltmittel wird im Rhythmus der Taktimpulsfolge der Kurzschluß der jeweiligen Anschlußleitung wirksam. Da eine eigene zentrale Leitung für die Übermittlung der Taktimpulsfolge vorgesehen ist, treten keine zeitkritischen Übermittlungsfälle auf, so daß damit eine zusätzliche schnelle Schnittstelle entbehrlich ist.

Gemäß einer Weiterbildung der Erfindung betätigt die zentral erzeugte Taktimpulsfolge leitungsindividuell einen über die zusätzliche Signalleitung angesteuerten elektronischen Schalter. Dessen Schaltstrecke bildet über die in der Zeitspanne, in der die Signalübertragung zum Zwecke der Aktivierung der Leuchtelemente erfolgt, ständig aktivierte Schaltmittel den Kurzschlußweg zwischen den Leitungsadern der betreffenden Anschlußleitung. Diese Schaltmittel sind also durch die entsprechenden Steuerinformationen der zentralen Steuereinheit lediglich zu Beginn dieser Zeitspanne zu aktivieren und mit Beendigung dieser Zeitspanne zu deaktivieren.

In einfacher Weise ist die optische Anzeige durch mindestens eine im Kommunikationsendgerät in Reihe mit einem Kondensator, die Leitungsadern überbrückende lichtemittierende Diode gebildet. Die optische Anzeige kann auch durch zwei antiparallel geschaltete Dioden gebildet sein, wobei diese Parallelschaltung in Reihe mit einem Kondensator die Leitungsadern überbrückt. Die Reihenschaltung aus Kondensator und lichtemittierender Diode ist gemäß einer Weiterbildung der Erfindung im Endgerät parallel zur akustischen Rufanzeige geschaltet.

Nach einer weiteren vorteilhaften Ausgestaltung der Erfindung ist das Schaltmittel durch Relais oder durch logische, integrierte, wirksam schaltbare Schaltkreistechnik realisierbar. Durch die Möglichkeit des Wirksam- bzw. Unwirksamschaltens der Ausgänge bei diesen logischen Schaltkreisen ist die Realisierung von Relais-Funktionen möglich.

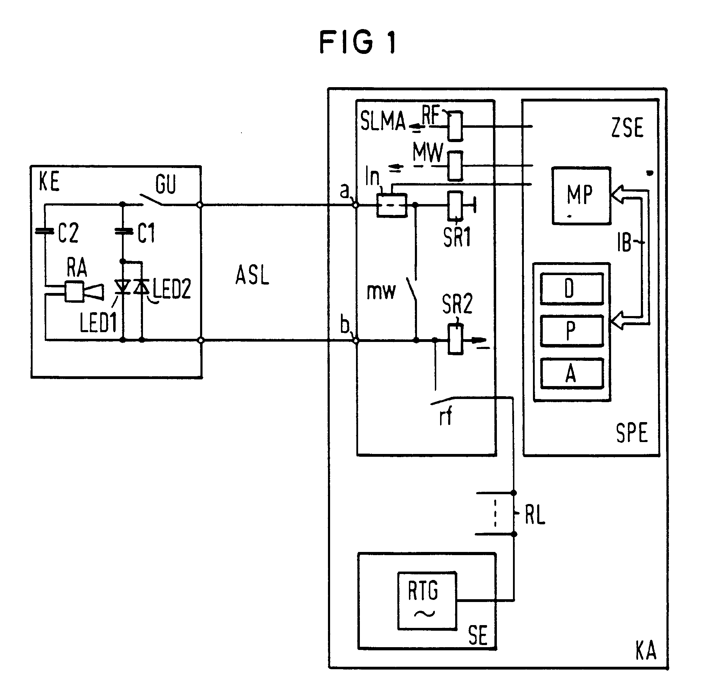

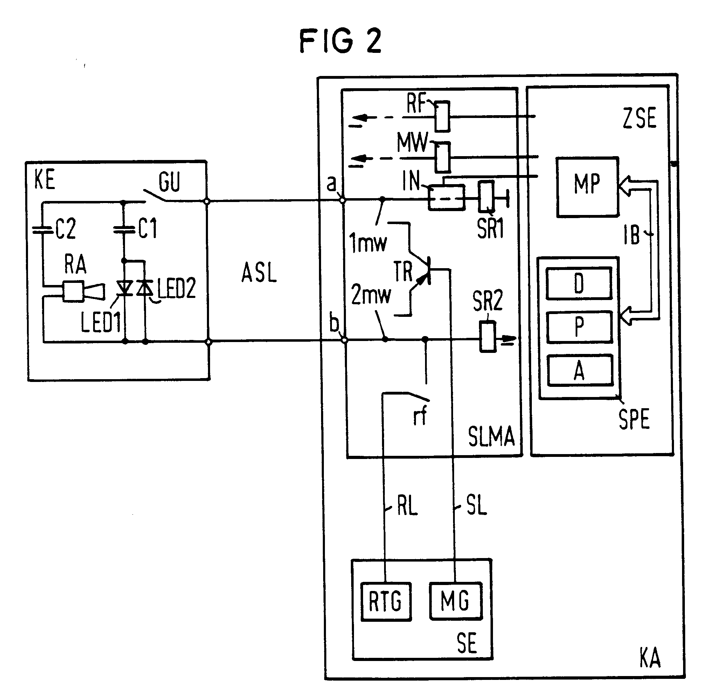

Im folgenden wird das erfindungsgemäße Verfahren anhand von zwei Ausführungsbeispielen näher erläutert. Die beiden Blockschaltbilder nach der FIG 1 und der FIG 2 unterscheiden sich in der Art der Steuerung des periodischen Leitungskurzschlusses.

In dem Blockschaltbild nach den FIGUREN sind lediglich die zum Verständnis der Erfindung notwendigen Komponenten dargestellt.

An die programmgesteuerte digitale Kommunikationsvermittlungsanlage KA nach FIG 1 sind sowohl digitale als auch analoge Kommunikationsendgeräte anschließbar. Dies erfolgt jeweils über entsprechend ausgebildete Leitungsanschlußeinrichtungen. An eine für den Anschluß von analogen Kommunikationsendgeräten vorhandene Leitungsanschlußeinrichtung SLMA können beispielsweise 16 derartige analoge Kommunikationsendgeräte über Anschlußleitungen ASL angeschlossen werden. Es ist eine zentrale Steuereinheit ZSE vorhanden, durch die sämtliche Steuerungsaufgaben des Systems übernommen werden. Sie wird durch die zentrale Speichereinrichtung SPE und die Mikroprozessoreinrichtung MP und gegebenenfalls weiteren nicht dargestellten Einrichtungen, wie z. B. eine Schnittstelleneinrichtung, gebildet. Die zentrale Speichereinrichtung SPE besteht aus einem Kundendatenspeicher KD, einem Programmspeicher P und aus einem Arbeitsspeicher A. Im Programmspeicher P sind unter anderem das Anlagenbetriebsprogramm abgespeichert. In dem Speicherteil KD sind die Kundendaten, wie z. B. die den einzelnen Kommunikationsendgeräten KE zugeteilten Berechtigungen, abgelegt. Der Arbeitsspeicher A dient unter anderem der Aufnahme von temporären Daten zur Programmablaufsteuerung. Der aus Adreß-, Daten- und Steuerleitungen gebildete interne Bus IB kann in nicht weiter dargestellter Weise auch über entsprechende Schnittstelleneinrichtungen auf einen lokalen Bus geführt sein. Darüberhinaus könnten bei entsprechender Anlagengröße die Steuerverbindungen zu nicht weiter dargestellten Eingabe-/Ausgabeeinrichtungen, die für die dynamische Entlastung der zentralen Mikroprozessoreinrichtung vorgesehen sind, vorgenommen werden. Diese tauschen dann ihrerseits in einem vorgegebenen Übermittlungsprotokoll Informationen mit der in den Leitungsanschlußeinrichtungen gegebenenfalls jeweils zusätzlich vorgesehenen Leitungssteuerungseinheit aus.

Mit Hilfe der Mikroprozessoreinrichtung MP wird die vermittlungstechnische und sicherheitstechnische Steuerung der Kommunikationsvermittlungsanlage KA durchgeführt. In der Leitungsanschlußeinrichtung SLMA werden beispielsweise bei einem für das Kommunikationsendgerät KE bestehenden Verbindungswunsch die Rufsignale angelegt. Dies erfolgt beispielsweise durch den Kontakt rf eines durch die Mikroprozessoreinrichtung MP gesteuerten Rufrelais RF. Mit dem Kontakt rf werden in einem bestimmten Rufrhythmus die von dem zentralen Rufgenerator RTG über die gemeinsame Rufleitung RL zugeführten Rufsignale an die Anschlußleitung angelegt. Durch unterschiedliche Zeitspannen, in denen die Rufsignale an die jeweilige Anschlußleitung angeschaltet werden, können unterschiedliche Rufrhythmen, z. B. für Internruf, Externruf, usw., bewirkt werden. Der zentrale Ruftongenerator RTG ist eine Teilkomponente einer zentralen Signaleinrichtung SE. Es werden also die von den in der Kommunikationsvermittlungsanlage implementierten Vermittlungsprozeduren übermittelten Anforderungen zum Aussenden von Rufsignalen für die jeweiligen Kommunikationsendgeräte mit Hilfe einer implementierten Rufprozedur bewertet und die entsprechenden Vorgänge gesteuert. Die an die Leitung ASL angelegten wechselstromförmigen Rufsignale beeinflussen im Kommunikationsendgerät KE über den Kondensator C2 die akustische Rufanzeige RA. Für diese akustische Ausgabe der Rufsignale kann diese Rufanzeige durch eine Klingeleinrichtung realisiert sein. Es ist auch die Abgabe eines akustischen Signals in Form eines Tonrufes durch einen Piezo-elektrischen Wandler denkbar. Im Ausführungsbeispiel sind nur die zur Erläuterung der Erfindung erforderlichen Komponenten eines Kommunikationsendgerätes KE dargestellt. Parallel zu dieser Serienschaltung aus einem Kondensator C2 und der akustischen Rufsignalanzeige RA ist über einen Kondensator C1 eine Leuchtanzeige angeordnet. Diese Leuchtanzeige ist im Ausführungsbeispiel durch zwei antiparallel geschaltete lichtemittierende Dioden LED1 und LED2 realisiert.

Bei geschlossenem Gabelumschaltekontakt GU im Kommunikationsendgerät KE werden die Leuchtelemente LED1 und LED2 durch periodisches Kurzschließen der a, b-Adern der Anschlußleitung ASL aktiviert. Die Initialisierung dieses periodischen Kurzschließens kann entweder durch einen entsprechenden Bedienungsauftrag oder automatisch erfolgen. Diese automatische Aktivierung kann beispielsweise durch ein der Kommunikationsvermittlungsanlage KA zugeordnetes - nicht weiter dargestelltes - Sprachinformationssystem erfolgen. In einem solchen Fall kann dem betreffenden Teilnehmer durch die Aktivierung der Leuchtelemente angezeigt werden, daß in der ihm zugeordneten Box des Sprachinformationssystems (Voice Mail System) eine Nachricht hinterlegt wurde.

Eine andere Möglichkeit besteht darin, durch einen Bedienerauftrag die Aktivierung des Leuchtelementes im Kommunikationsendgerät zu veranlassen. Hierzu ist dann beispielsweise durch eine Bedienperson, gegebenenfalls unter Beschränkung auf den zugehörigen Vermittlungsplatz, neben der Rufnummer des anzusprechenden Teilnehmers ein für die Aktivierung dieses Leistungsmerkmals charakteristischer Ziffern- und/oder Steuerzeichencode einzugeben. Diese Information veranlaßt dann die zentrale Steuereinheit ZSE durch entsprechende Steuerimpulse, das Relais MW periodisch zu betätigen, so daß dadurch die Anschlußleitung ASL in dem vorgegebenen Rhythmus durch den Kontakt mw kurzgeschlossen wird. Durch den kurzzeitigen Kurzschluß wird der Kondensator C1 über die eine lichtemittierende Diode LED1 entladen und in dem dazwischenliegenden Zeitabschnitt bis zum nachfolgenden Kurzschluß der Leitung aufgeladen. Dadurch wird dann die andere lichtemittierende Diode LED2 zum Leuchten gebracht. Dieses Wechselspiel setzt sich solange fort, bis eine Endeinformation gebildet wird. Mit dieser Endeinformation kann dann die im Arbeitsspeicher A abgelegte Initialisierungsinformation überschrieben werden. Diese Endeinformation kann beispielsweise durch den Teilnehmer der Kommunikationsvermittlungsanlage KA übermittelt werden. Durch die im Kommunikationsendgerät vorgesehene optische Anzeige könnte auch signalisiert werden, daß während einer vorhergehenden aktuellen Verbindung ein weiterer Verbindungsaufbau zu diesem Kommunikationsendgerät versucht wurde. Durch ein anschließendes Betätigen eines entsprechenden Eingabemittels an diesem analogen Kommunikationsendgerät könnte dann mit Hilfe der Kommunikationsvermittlungsanlage selbsttätig eine Verbindung zu demjenigen Kommunikationsendgerät hergestellt werden, von dem dieser Verbindungswunsch ausgegangen ist.

Die Intensität des Leuchtens der lichtemittierenden Dioden LED1, LED2 ist abhängig von dem Speisestrom der Teilnehmerschaltung der Kommunikationsvermittlungsanlage.

Mit SR1 und SR2 sind die in der Teilnehmeranschlußeinrichtung für die einzelnen Anschlußleitungen vorhandenen Speiserelais angedeutet. Damit die für jede Anschlußleitung vorgesehene Indikationsschaltung In nicht anspricht, muß die Dauer des durch den Kontakt mw bewirkten Kurzschlusses der Anschlußleitung unterhalb der Schleifenerkennungszeit liegen. Das in der Indikationsschaltung den Zustand der Teilnehmerleitungsschleife signalisierende Schaltmittel wird üblicherweise von der zentralen Steuereinheit ZSE abgefragt und aufgrund dieser Abfrage werden dann die entsprechenden Folgefunktionen eingeleitet.

Bei Anliegen der vom Rufsignalgeber RTG gelieferten Rufsignale durch den individuell für jede Anschlußleitung ASL vorgesehenen Kontakt rf werden die lichtemittierenden Dioden LED1, LED2 durch die einzelnen Halbwellen des wechselstromförmigen Rufsignales parallel zur Aktivierung des akustischen Rufsignalgebers RA gleichfalls aktiviert. Eine Aktivierung dieser Leuchtanzeige ohne Abgabe eines akustischen Signals ermöglicht jedoch die voranstehend genannten Informationsinhalte, die unter anderem die "Message Waiting"-Information betrifft.

Im Ausführungsbeispiel nach der FIG 2 wird im Gegensatz zu dem Ausführungsbeispiel nach der FIG 1 das Relais MW nicht durch die Mikroprozessoreinrichtung MP der zentralen Steuereinheit ZSE getaktet, sondern es liegt eine Taktinformation über eine zentrale Signalleitung SL in jeder Leitungsanschlußeinrichtung SLMA vor. Diese Taktinformation wird durch den zentralen Taktgeber MG, der der Signaleinrichtung SE zugehörig ist, geliefert. Diese Taktinformationen werden an den Steuereingang eines für jede Anschlußleitung ASL vorgesehenen elektronischen Schalters - im Ausführungsbeispiel in Form eines Transistors TR - angelegt. In der Zeitspanne, in der die aus den lichtemittierenden Dioden LED1, LED2 bestehende Leuchtanzeige aktiviert werden soll, ist das Relais MW durch die zentrale Steuereinheit ZSE ständig wirksam geschaltet. Unter Einbeziehung der Kollektor-Emitter-Schaltstrecke des Transistors TR bzw. ganz allgemein unter Einbeziehung der Schaltstrecke des elektronischen Schalters werden durch die betätigten Kontakte 1mw, 2mw die Leitungsadern a, b der Anschlußleitung ASL überbrückt. Der wirksame Kurzschluß erfolgt im Rhythmus der durch den Generator MG gelieferten Taktimpulse, da mit jedem Impuls der elektronische Schalter in Form des Transistors TR wirksam durchgeschaltet ist. Da also in diesem Ausführungsbeispiel das Öffnen und Schließen des die Leitung kurzschließenden Schalters durch die zentral erzeugten Taktimpulse bewirkt wird, hat dies eine dynamische Entlastung der zentralen Steuereinheit ZSE zur Folge. Für das Kurzschließen der Leitung durch die Taktimpulse gelten die für das Ausführungsbeispiel 1 genannten zeitlichen Bedingungen, d. h. die Zeitdauer des wirksamen Kurzschlusses muß unterhalb der Ansprechzeit der Leitungsindikation In liegen und der jeweils dazwischenliegende Zeitabschnitt sollte länger als die Zeitdauer des wirksamen Kurzschlusses gewählt werden.

Die übrigen Komponenten und Bauteile bzw. Baueinheiten der FIG 2 entsprechen denen der FIG 1 und sind in gleicher Weise bezeichnet.

## Patentansprüche

1. Verfahren zur Aktivierung einer optischen Anzeige (LED) in einem an eine programmgesteuerte Kommunikationsvermittlungsanlage (KA) über analoge Anschlußleitungen (ASL) bzw. Anschlußtechnik angeschlossenen Kommunikationsendgerät (KE), wobei die Kommunikationsvermittlungsanlage (KA) eine unter anderem die vermittlungstechnische Steuerung und Koordinierung durchführende zentrale Steuereinheit (ZSE) aufweist und in den jeweiligen Leitungsanschlußeinrichtungen (SLMA) durch eine Rufprozedur Schaltmittel (RF) gesteuert werden, durch die wechselstromförmige Rufsignale an die jeweilige Anschlußleitung anschaltbar sind und die Rufsignale in einem Ruftongenerator einer zentralen Signaleinrichtung erzeugt und über eine Rufleitung an die Leitungsanschlußeinrichtungen (SLMA) verteilt werden und wobei eine Leitungsindikation (Ln) erfolgt, durch deren Abfrage die zentrale Steuereinheit (ZSE) den aktuellen Zustand der jeweiligen Anschlußleitung (ASL) feststellt,
**dadurch gekennzeichnet**,
daß mit Hilfe mindestens eines für jede der genannten Anschlußleitungen (ASL) vorhandenen zusätzlichen Schaltmittels (MW) entweder durch eine an einem Vermittlungsplatz durch eine bestimmte Prozedur vorgenommene Informationseingabe oder automatisch in Zusammenhang mit einer vorbestimmten vermittlungstechnischen Situation zur Aktivierung der optischen Anzeige (LED1, 2) in einem damit ausgewählten Kommunikationsendgerät (KE) die betreffende Anschlußleitung (ASL) während einer bis zur Bildung einer jeweiligen Endeinformation definierten Zeitspanne mit einer bestimmten Taktimpulsfolge kurzgeschlossen wird, daß sowohl zur fehlerfreien Leitungsindikation als auch zur sicheren Vermeidung des Ansprechens der Rufanzeige (RA) im Kommunikationsendgerät (KE) die Zeitdauer des wirksamen Kurzschlusses unterhalb der Ansprechzeit der Leitungsindikation und der jeweils dazwischenliegende Zeitabschnitt länger als die Zeitdauer des wirksamen Kurzschlusses gewählt ist, daß mit dem Wirksamwerden der Taktimpulsfolge eine Steuerinformation hierüber bis zur durch die zentrale Steuereinheit oder teilnehmer- bzw. vermittlungsplatzseitig initiierbaren Endeinformation in einem Arbeitsspeicherbereich (A) einer Speichereinrichtung (SPE) der zentralen Steuereinheit (ZSE) eingeschrieben ist.

2. Verfahren nach Anspruch 1,
**dadurch gekennzeichnet,**
daß die Impulsdauer der Impulse der Taktimpulsfolge die Zeitdauer des wirksamen Kurzschlusses der jeweiligen Anschlußleitung bestimmt.

3. Verfahren nach Anspruch 1 oder 2,
**dadurch gekennzeichnet,**
daß das taktgemäße Kurzschließen der Anschlußleitung (ASL) durch ein von der zentralen Steuereinheit (ZSE) während der genannten Zeitspanne im Rhythmus dieser Taktimpulsfolge gesteuertes leitungsindividuelles Schaltmittel ((MW), Kontakt mw) bewirkt wird.

4. Verfahren nach Anspruch 1 oder 2,
**dadurch gekennzeichnet,**
daß die Taktimpulsfolge von einem der zentralen Signaleinrichtung (SE) zugehörigen Taktgenerator (MG) erzeugt wird, daß die Taktimpulsfolge über eine den Leitungsanschlußeinrichtungen (SLMA) gemeinsam zugeordnete zusätzliche Signalleitung (SL) verteilt wird, daß über die während der genannten Zeitspanne ständig aktivierten Schaltmittel (1mw, 2mw) im Rhythmus der Taktimpulsfolge der Kurzschluß der Anschlußleitung wirksam wird.

5. Verfahren nach Anspruch 4,
**dadurch gekennzeichnet,**
daß die Taktimpulsfolge leitungsindividuell einen über die Signalleitung (SL) angesteuerten elektronischen Schalter (TR) betätigt, dessen Schaltstrecke über die in der genannten Zeitspanne ständig aktivierten Schaltmittel (MW, Kontakte 1mw, 2mw) den Kurzschlußweg zwischen den Leitungsadern (a, b) der Anschlußleitung (ASL) bildet.

6. Verfahren nach Anspruch 1,
**dadurch gekennzeichnet,**
daß die optische Anzeige durch mindestens eine im Kommunikationsendgerät (KE) in Reihe mit einem Kondensator die Leitungsadern überbrückende lichtemittierende Diode (LED) gebildet wird.

7. Verfahren nach Anspruch 6,
**dadurch gekennzeichnet,**
daß die optische Anzeige durch zwei antiparallel geschaltete Dioden (LED1, LED2) gebildet wird und diese Parallelschaltung in Reihe mit einem Kondensator (C1) die Leitungsadern überbrückt.

8. Verfahren nach Anspruch 6 bzw. 7,
**dadurch gekennzeichnet**,
daß die Reihenschaltung aus Kondensator und lichtemittierender Diode im Endgerät parallel zur akustischen Rufanzeige (RA) geschaltet ist.

9. Verfahren nach einem der vorhergehenden Ansprüche,
**dadurch gekennzeichnet,**
daß die Schaltmittel (MW, RF) durch Relais oder durch logische, integrierte wirksam schaltbare Schaltkreistechnik realisierbar sind.

10. Verfahren nach einem der vorhergehenden Ansprüche,
**dadurch gekennzeichnet,**
daß mit der Durchschaltung einer Gesprächsverbindung die optische Anzeige in gleicher Weise wie die akustische Rufanzeige unwirksam geschaltet ist.

## Claims

1. Method for the activation of an optical indicator (LED) in a communication terminal (KE) which is connected to a program-controlled communication switching installation (KA) via analog connecting lines (ASL) or connecting technology, the communication switching installation (KA) having a central control unit (ZSE) carrying out, inter alia, the switching control and coordination and, in the respective line connection devices (SLMA), by means of a calling procedure, switching means (RF) being controlled by means of which alternating-current-like calling signals can be connected to the respective connecting line and the calling signals being generated in a calling tone generator of a central signal equipment and being distributed to the line connection devices (SLMA) via a calling line, and a line indication (LN) being carried out, by means of interrogating which the central control unit (ZSE) determines the current state of the respective connecting line (ASL), characterized in that, with the aid of at least one additional switching means (MW) which is provided for each of the said connecting lines (ASL), either by means of an information input carried out at a switching console by means of a specific procedure or automatically in conjunction with a predetermined switching situation for the activation of the optical indicator (LED1, 2) in a communication terminal (KE) selected therewith, the relevant connecting line (ASL) is short-circuited with a specific clock pulse sequence during a time span defined up to the formation of a respective end information item, in that, both for fault-free line indication and for the reliable avoidance of the response of the call indicator (RA) in the communication terminal (KE), the time duration of the effective short circuit is selected to be below the response time of the line indication and the respectively intermediate period of time is selected to be longer than the time duration of the effective short circuit, in that, with the clock pulse sequence becoming effective, an item of control information about this, up to the end information item which can be initiated by the central control unit or at the subscriber end or switching console, is written in a main memory area (A) of a memory device (SPE) of the central control unit (ZSE).

2. Method according to Claim 1, characterized in that the pulse duration of the pulses of the clock pulse sequence determines the time duration of the effective short circuit of the respective connecting line.

3. Method according to Claim 1 or 2, characterized in that the clocked short-circuiting of the connecting line (ASL) is effected by a line-individual switching means ((MW), contact mw) controlled by the central control unit (ZSE) during the said time span in synchronism with the said clock pulse sequence.

4. Method according to Claim 1 or 2, characterized in that the clock pulse sequence is generated by a clock generator (MG) belonging to the central signal equipment (SE), in that the clock pulse sequence is distributed via an additional signal line (SL) assigned jointly to the line connection devices (SLMA), and in that the short circuit of the connecting line becomes effective via the switching means (1mw, 2mw) which are continuously activated during the said time span in synchronism with the clock pulse sequence.

5. Method according to Claim 4, characterized in that the clock pulse sequence actuates in a line-individual manner an electronic switch (TR) which is driven via the signal line (SL) and whose switching path forms the short-circuit path between the line conductors (a, b) of the connecting line (ASL) via the switching means (MW, contacts 1mw, 2mw) which are continuously activated in the said time span.

6. Method according to Claim 1, characterized in that the optical indicator is formed by at least one light-emitting diode (LED), bridging across the line conductors in series with a capacitor, in the communication terminal (KE).

7. Method according to Claim 6, characterized in that the optical indicator is formed by two diodes (LED1, LED2) connected in antiparallel and this parallel circuit bridges across the line conductors in series with a capacitor (C1).

8. Method according to Claims 6 and 7, characterized in that the series circuit of capacitor and light-emitting diode in the terminal is connected in parallel with the acoustic call indicator (RA).

9. Method according to one of the preceding claims, characterized in that the switching means (MW, RF) can be realized by relays or by logic, integrated effectively switchable circuit technology.

10. Method according to one of the preceding claims, characterized in that, upon switching through a speech connection, the optical indicator is switched to be ineffective in the same way as the acoustic call indicator.

## Revendications

1. Procédé d'activation d'un affichage optique (LED) d'un terminal de communication (KE) raccordé par l'intermédiaire de lignes analogiques de raccordement (ASL) ou au moyen d'une technique de raccordement analogique à une installation (KA) programmée de commutation de communication, l'installation de commutation de communication (KA) ayant une unité de commande centrale (ZSE), qui effectue notamment la commande et la coordination du point de vue technique de commutation, et des moyens de commutation (RF), par lesquels on peut appliquer les signaux d'appel sous forme de courant alternatif à la ligne de raccordement, et par lesquels on produit les signaux d'appel dans un générateur de tonalités d'un dispositif central de production de signaux et on les répartit par l'intermédiaire d'une ligne d'appel entre les dispositifs (SLMA) de lignes, sont commandés dans les connecteurs (SLMA) de ligne par une procédure d'appel et selon lequel une indication de ligne (Ln), par l'interrogation de laquelle l'unité de commande centrale (ZSE) détermine l'état actuel de la ligne de raccordement (ASL), s'effectue,
caractérisé par le fait
qu'à l'aide d'au moins un moyen de commutation supplémentaire (MW) présent pour chacune desdites lignes de raccordement (ASL), soit en effectuant dans une position d'opératrice une introduction d'informations par une procédure déterminée, soit automatiquement en liaison avec une situation technique de commutation prédéterminée, on court-circuite par un train déterminé d'impulsions de cadence pour l'activation de l'affichage optique (LED1, 2) dans un terminal de communication (KE) ainsi sélectionné, la ligne de raccordement concernée (ASL) pendant un laps de temps, qui est défini jusqu'à ce qu'une information de fin soit formée, qu'aussi bien pour l'indication sans erreur de lignes sans défaut que pour empêcher de façon sûre la réaction de l'indication d'appel (RA) dans le terminal de communication (KE), on choisit la durée du court-circuit actif inférieure au temps de réaction de l'indication de ligne, et le laps de temps intercalaire supérieur à la durée du court-circuit actif, et que lorsque le train d'impulsions de cadence devient actif, on enregistre une information de commande concernant ce fait dans une zone (A) de la mémoire de travail d'un dispositif de mémoire (SPE) de l'unité de commande centrale (ZSE) jusqu'à ce que l'information de fin puisse être déclenchée par l'unité de commande centrale par l'abonné ou par l'opératrice.

2. Procédé suivant la revendication 1, caractérisé par le fait que la durée des impulsions de la suite d'impulsions de cadence détermine la durée du court-circuit actif de la ligne de raccordement.

3. Procédé suivant la revendication 1 ou 2, caractérisé par le fait que la mise en court-circuit cadencée de la ligne de raccordement (ASL) est déclenchée par un moyen de commutation ((MW), contact mw) prévu pour chaque ligne et commandé pendant ledit laps de temps au rythme de ce train d'impulsions de cadence.

4. Procédé suivant la revendication 1 ou 2, caractérisé par le fait que le train d'impulsions de cadence est produit par un générateur de cadence (MG) associé au dispositif central de production de signaux (SE), que le train d'impulsions de cadence est réparti par l'intermédiaire d'une ligne de transmission de signaux supplémentaire (SL) associée en commun aux connecteurs (SLMA) de lignes, et que la mise en court-circuit de la ligne de raccordement devient active au rythme du train d'impulsions de cadence par l'intermédiaire des moyens de commutation (1mw, 2mw), activés en permanence pendant ledit laps de temps.

5. Procédé suivant la revendication 4, caractérisé par le fait que le train d'impulsions de cadence actionne un interrupteur électronique (TR), qui est commandé par l'intermédiaire de la ligne de transmission de signaux (SL) et dont la section de commutation forme, par l'intermédiaire des moyens de commutation (MW, contacts 1mw, 2mw), activés en permanence pendant ledit laps de temps, la voie de court-circuit entre les conducteurs (a,b) de la ligne de raccordement (ASL).

6. Procédé suivant la revendication 1, caractérisé par le fait que l'affichage optique est formé par au moins une diode photoémissive (LED), qui shunte les conducteurs de la ligne, tout en étant branchée en série avec un condensateur, dans le terminal de communication (KE).

7. Procédé suivant la revendication 6, caractérisé par le fait que l'affichage optique est formé par deux diodes (LED1, LED2) branchées selon un montage en parallèle tête-bêche et ce circuit parallèle, en série avec un condensateur (C1), shunte les conducteurs de la ligne.

8. Procédé suivant la revendication 6 ou 7, caractérisé par le fait que le circuit série formé du condensateur et d'une diode photoémissive est branché en parallèle avec le système acoustique d'indication d'appel (RA), dans le terminal.

9. Procédé suivant l'une des revendications précédentes, caractérisé par le fait que les moyens de commutation (MW, RF) peuvent être formés de relais ou au moyen d'une technique de circuit logique intégré, pouvant être branché d'une manière active.

10. Procédé suivant l'une des revendications précédentes, caractérisé par le fait que lors de la transmission d'une conversation téléphonique, l'affichage optique est placé à l'état inactif, de la même manière que le système d'indication acoustique d'appel.
